# EUROPEAN PATENT SPECIFICATION

(11) **EP 0 857 952 B1**
(45) Date of publication and mention of the grant of the patent: **11.04.2007**
(21) Application number: 97850020.5
(22) Date of filing: 11.02.1997
(51) Int. Cl.: G01F 1/80

(54) **Impeller torque measuring device**
Drehmomentmessvorrichtung für Flügelrad
Dispositif de mesure de couple pour un rotor

(43) Date of publication of application: 12.08.1998
(73) Proprietor: S.E.G. MEKANIK AB, S-662 00 Amal (SE)
(72) Inventor: Söderholm, Arne, 167 67 Bromma (SE); Söderholm, Olle, 161 55 Bromma (SE)
(74) Representative: Karlström, Lennart

(56) References cited:
- EP-A- 0 196 440
- EP-A- 0 474 121
- EP-A- 0 537 765
- EP-A- 0 590 187
- US-A- 2 771 772
- US-A- 2 771 773

## Description

The present invention relates to an apparatus for measuring a mass flow, in particular of a bulk material or a fluid, and the invention especially relates to an impeller torque measuring device used in a measuring device in which the mass flow rate is measured by using the Coriolis measuring principle.

Such a prior measuring device is described in our copending European patent application No. 96850202.1, filed on 29 November 1996, describing the main principles for such a mass flow meter, and to which application herewith is referred.

In such a measuring device the particles to be measured are subjected to tangential acceleration in a whirling impeller, and the torque exerted on the vanes of the impeller in reaction to the Coriolis force of accelerated particles is being measured as an indication of the mass flow rate. The object of our above European patent application was to avoid measurement errors, due to uneven distribution of the material to be measured.

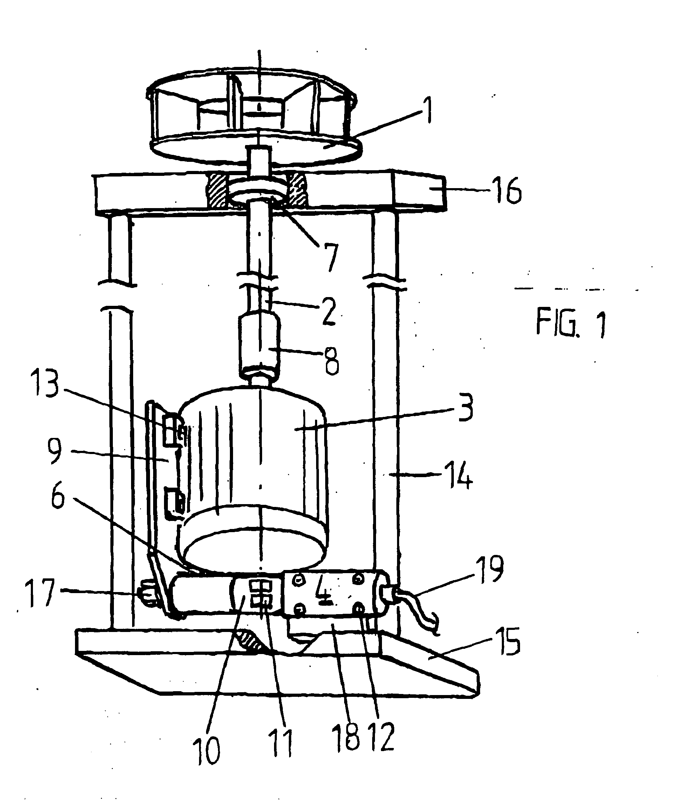

Different arrangements to measure the torque are known. The oldest known arrangement of this type is described in US-A-2,771,772. Figs. 1, 2 and 4 in this document show the arrangement. The driving motor 16 have its stator fastened in a supporting plate 13, which is hanging in three posts 12. The torque from the motor is measured based on the distance between the knob 14 at the motor centre, and a bearing roller 25. The distance is representing the moment arm and the force between knobs the force. This is measured by a pneumatic servo (Fig. 4) and the moment read on a recorder 72.

Another arrangement is shown in EP-A-537 765 dealing with a Coriolis flow meter designed mainly for measuring flow of bulk materials in pneumatic transport systems whereby the rotating shaft is horizontal. A number of arrangements to apply the load cell 7 are.shown in Figs. 5 - 10. They have in common that the vertical forces on the bearings 6 will become considerable with the shaft being horizontal. Different combinations of arms 22, 24 and 26 introduce the force acting on the load cells 7. The transfer systems have in common that the force acting on the load cell is balanced by an equal counter force. This cross force results in a frictional force in the bearings and thereby resulting in a measuring error. It reduces the force transmitted to the load cell.

A third arrangement is shown in EP-A-0 590 187. In Fig. 1 the shaft 7 for the impeller 8 is vertical and the motor 1 is mounted on the top. To the frame 2, 6 the motor - impeller assembly via three flat springs 4a is hanging in the plate 5. Parallel with the springs 4a are two load cells 4, 14 situated for measuring the impeller moment. The relatively long impeller shaft in combination with the sideways and asymmetrically entering material tube 10 makes this construction suitable for only small capacity applications.

The object of the present invention is to provide a device for accurately measuring the torque exerted by the material on the impeller vanes.

The above object has been obtained in that the invention has been given the characterizing features stated in the appended claims.

The invention will now be described in the form of a non-limiting embodiment, shown on the enclosed drawing, in which **Fig. 1** shows a schematic perspective view of part of a mass flow measuring device including an impeller with its drive shaft, drive motor and torque measuring device according to an embodiment of the invention.

The part of the device shown in Fig. 1 is intended to be a part of a complete device for measuring a mass flow of the kind described in our copending European patent application No. 96850202.1, but in this Fig. is only shown the impeller 1 and its drive and torque measuring devices. The other parts relating to the measuring device can have the same, but also alternative, designs as those shown in our previous application.

The impeller 1 is mounted for rotation on a vertical shaft 2, driven by an electric motor 3, wherein the shaft 2 and the motor 3 are located under the impeller 1. The impeller 1 is mounted on one end of the shaft 2 and the motor 3 on the other end. Under the motor 3 a torque transducer 4 is located. The shaft 2 is journalled in a radial bearing 7, supported by a bearing cage 16 which in its turn by means of two columns 14 is connected to a base frame 15, thus preventing the shaft 2 and the motor 3 from radial displacement. The shaft 2 is by means of a coupling 8 connected to the motor shaft of the motor 3. The base frame 15, the two columns 14 and the bearing cage 16 together form a stand for the measuring device.

On the motor body is attached a fastening plate 9, attached to the motor body by means of attachment screws 13, and to the lower end of the fastening plate 9 a transfer part 6 rigid in horizontal and vertical directions is connected. The transfer part 6 is made integral with the torque transducer 4, and the transfer part 6 and the torque transducer 4 are interconnected by a torque measuring section 10, comprising a strain gauge 11 for measuring the torque exerted by the motor 3 on the fastening plate 9 and the transfer part 6. The torque transducer 4 is by a connection wire 19 connected to an electronic device, not shown, e.g. a micro computer for evaluation of the torque signal and for controlling the measuring device. The body of the torque transducer 4 is attached to an angle bar 18 by means of attachment bolts 12, and the angle bar 18 is attached to the base frame 15.

## Claims

1. An impeller torque measuring device for a measuring device in which the mass flow rate, in particular of a bulk material or a fluid, is measured by using the Coriolis measuring principle, comprising an impeller (1) mounted for rotation on a vertical shaft (2) driven by a motor (3),
the impeller (1) being mounted on a first end of the shaft (2) and the motor (3) on a second end of the shaft (2),
the impeller, shaft and motor all being mounted in a stand (14, 15, 16) with the impeller (1) located above the shaft (2) and the motor (3), so that a mass flow which is charged into the central area of the rotating impeller (1) is radially directed to leave the rotating impeller (1) over its circumferential edge, wherein
said first end of the shaft (2) is journalled by means of a radial bearing (7) located in a bearing cage (16) of said stand and there is no thrust bearing for supporting the weight of the impeller (1) and of the motor (3), and
a torque transducer (4), provided for measuring the torque necessary for rotating the impeller (1), is located under the motor and is attached both to the motor (3) and to the stand (14, 15, 16), so as to be able to carry thrust loads from the motor and the impeller.

2. A device according to claim 1, **characterised in that** the torque transducer (4) is arranged to measure the torque only in a plane perpendicular to the axial direction of the shaft (2).

## Patentansprüche

1. Ein Laufrad-Rotationsmessgerät für ein Messgerät, in welchem der Massendurchfluß von insbesondere einem losen Material oder einer Flüssigkeit mit Hilfe des Coriolis-Meß-Prinzips gemessen wird, welches ein Laufrad (1) umfasst zur Rotation mit einem vertikalen Schaft (2), welcher durch einen Motor (3) angetrieben wird,
das Laufrad (1) ist an einem ersten Ende des Schaftes (2) befestigt und der Motor an einem zweiten Ende des Schaftes (2),
das Laufrad, der Schaft und der Motor sind alle an einem Gestell (14,15,16) befestigt und das Laufrad (1) befindet sich oberhalb des Schaftes (2) und des Motors (3), so dass der Massendurchfluß, welcher in einer zentralen Gegend des rotierenden Laufrads (1) aufgebracht wird, derart radial geleitet wird, um das rotierende Laufrad über dessen umlaufende Kante zu verlassen, wobei
das genannte erste Ende des Schaftes (2) mittels eines Radiallagers (7), welches in einer Lageraufnahme (16) des Gestells angeordnet ist, gelagert ist und kein Axiallager zur Abstützung des Gewichts des Laufrads (1) und des Motors (3) vorgesehen ist, und
ein Drehmomentüberträger (4) zur Messung des Drehmoments, welches notwendig ist, das Laufrad (1) zu drehen, unter dem Motor angeordnet ist und mit sowohl dem Motor (3) als auch dem Gestell (14,15,16) verbunden ist, um Axialkräfte von dem Motor und dem Laufrad aufnehmen zu können.

2. Eine Vorrichtung gemäß Anspruch 1, **dadurch gekennzeichnet, dass** der Drehmomentüberträger (4) derart angeordnet ist, um das Drehmoment nur in einer zur axialen Richtung des Schaftes (2) senkrechten Ebene zu messen.

## Revendications

1. Dispositif de mesure de couple d'un propulseur rotatif destiné à un dispositif de mesure pour mesurer le débit massique, en particulier d'un matériau en vrac ou d'un fluide, en utilisant le principe de Coriolis, le dispositif de mesure comprenant un propulseur (1) monté pour tourner sur un arbre vertical (2) en étant entraîné par un moteur (3),
le propulseur (1) étant monté sur une première extrémité de l'arbre (2) et le moteur (3) étant monté sur la seconde extrémité de l'arbre (3), le propulseur, l'arbre et le moteur étant montés sur un châssis ou bâti (14, 15, 16), le propulseur (1) étant placé au-dessus de l'arbre (2) et du moteur (3), avec débit massique chargé dans la zone centrale du propulseur rotatif (1) et dirigé radialement pour quitter le propulseur rotatif (1) à son bord périphérique,
dans lequel
la première extrémité de l'arbre (2) est montée en rotation au moyen d'un palier radial (7) placé dans une cage de palier (16) du bâti, tandis qu'il n'y a pas de palier de butée pour supporter le poids du propulseur (1) et du moteur (3), et un transducteur de couple (4) destiné à mesurer le couple nécessaire pour faire tourner le propulseur (1), est placé sous le moteur et attaché à la fois au moteur (3) et au bâti (14, 15, 16), en étant capable de supporter les charges de poussée du moteur et du propulseur.

2. Dispositif selon la revendication 1,
**caractérisé en ce que**
le transducteur de couple (4) est disposé pour ne mesurer le couple que dans un plan perpendiculaire à la direction axiale de l'arbre (2),
